# EUROPÄISCHE PATENTSCHRIFT

(11) **EP 3 204 790 B1**
(45) Veröffentlichungstag und Bekanntmachung des Hinweises auf die Patenterteilung: **24.07.2019**
(21) Anmeldenummer: 15719146.1
(22) Anmeldetag: 29.04.2015
(51) Int. Cl.: G01S 13/93, G01S 7/02

(54) **RADARSENSORANORDNUNG UND KRAFTFAHRZEUG**
RADAR SENSOR ARRANGEMENT AND MOTOR VEHICLE
ENSEMBLE CAPTEUR RADAR ET VÉHICULE AUTOMOBILE

(30) Priorität: 06.10.2014 DE 102014014860
(43) Veröffentlichungstag der Anmeldung: 16.08.2017
(73) Patentinhaber: Audi AG, 85045 Ingolstadt (DE)
(72) Erfinder: KHLIFI, Rachid, 85748 Garching (DE)
(74) Vertreter: Thielmann, Frank
(86) Internationale Anmeldenummer: PCT/EP2015/000874
(87) Internationale Veröffentlichungsnummer: WO 2016/055130

(56) Entgegenhaltungen:
- WO-A1-2009/012361
- DE-A1- 10 109 343
- DE-A1-102013 100 554
- US-A- 6 016 122
- US-A1- 2014 203 994
- US-B1- 7 038 620
- MAHANFAR A ET AL: "Smart antennas using electro-active polymers for deformable parasitic elements", ELECTRONIC LETTERS, THE INSTITUTION OF ENGINEERING AND TECHNOLOGY, Bd. 44, Nr. 19, 11. September 2008 (2008-09-11), Seiten 1113-1114, XP006031735, ISSN: 1350-911X, DOI: 10.1049/EL:20081013
- MATTHEW MELOCHE ET AL: "A MEMS Non-Planar Constant Beamwidth Ultrasonic Sensor Microarray", NORTH-EAST WORKSHOP ON CIRCUITS AND SYSTEMS, 2006 IEEE, IEEE, PI, 1. Juni 2006 (2006-06-01), Seiten 273-276, XP031019350, ISBN: 978-1-4244-0416-2
- CHANG-WOOK BAEK ET AL: "A V-BAND MICROMACHINED 2-D BEAM-STEERING ANTENNA DRIVEN BY MAGNETIC FORCE WITH POLYMER-BASED HINGES", IEEE TRANSACTIONS ON MICROWAVE THEORY AND TECHNIQUES, IEEE SERVICE CENTER, PISCATAWAY, NJ, US, Bd. 1, Nr. 51, 1. Januar 2003 (2003-01-01) , Seiten 325-331, XP001141826, ISSN: 0018-9480, DOI: 10.1109/TMTT.2002.806516

## Beschreibung

Die Erfindung betrifft eine Radarsensoranordnung für ein Kraftfahrzeug, umfassend wenigstens zwei Antennenmodule mit jeweils einer Sendeeinheit zum Aussenden von Radarsignalen und einer Empfangseinheit zum Empfangen von Radarsignalen, wobei die Antennenmodule auf einem gemeinsamen Substrat angeordnet sind, das elastisch oder plastisch verformbar ist und wenigstens eine Schaltungskomponente aufweist, die mit jedem der auf dem Substrat angeordneten Antennenmodule verbindbar oder verbunden ist, wobei die wenigstens eine Schaltungskomponente in einem Chip oder Modul integriert ist.

Radarsensoren werden heutzutage in Kraftfahrzeugen meist als Umfeldsensoren für einen mittleren und größeren Distanzbereich eingesetzt, um andere Verkehrsteilnehmer oder größere Objekte hinsichtlich Distanz, Winkel und Relativgeschwindigkeit erfassen zu können.

Derart erfasste Radardaten können in Umfeldmodelle eingehen oder auch unmittelbar Fahrzeugsystemen zur Verfügung gestellt werden. Nutzen aus Radardaten ziehen beispielsweise Längsführungssysteme, wie ein ACC (automatic cruise control), oder auch Sicherheitssysteme.

Radarsensoren herkömmlicher Bauart weisen meist eine größere Ausdehnung auf, da die Antennen sowie die unmittelbar an der Antenne benötigten Elektronikkomponenten, also das Radarfrontend, in einem Gehäuse integriert sind. Hauptsächlich bilden die Elektronikkomponenten dabei den Radar-Transceiver, der eine Frequenzsteuerung, Mischeinrichtungen, einen Low Noise Amplifier und dergleichen enthält. Oft werden jedoch zusätzlich auch Steuermodule und digitale Signalverarbeitungskomponenten antennennah realisiert, beispielsweise um bereits aufbereitete Sensordaten, beispielsweise Objektlisten, auf einen angeschlossenen Bus, beispielsweise einen CAN-Bus, geben zu können.

Eine beispielhafte Realisierung eines 77-GHz-Radar-Transceivers als ein CMOS-Chip ist in dem Artikel von Jeri Lee et al., "a fully integrated 77-GHz FMCW radar transceiver in 65-nm CMOS technology", IEEE Journal of solidstate circuits 45 (2010), Seiten 2746 - 2755, beschrieben.

Es wurde auch bereits vorgeschlagen, den Chip und die Antenne in einem gemeinsamen Modul anzuordnen. Dadurch wird ein äußerst kostengünstiger und kleiner Radarsensor gebildet, der Bauraumanforderungen deutlich besser erfüllen kann und aufgrund der kurzen Signalwege auch ein sehr niedriges Signal-zu-Rausch-Verhältnis aufweist sowie für hohe Frequenzen und größere, variable Frequenzbandbreiten geeignet ist. Daher lassen sich derartige, klein bauende Radarsensoren auch für Kurzreichweiten-Anwendungen, beispielsweise im Bereich von 30 cm bis 10 m, einsetzen.

Aus dem Dokument US 5 008 678 A sind Radarsensoren bekannt, die auf einer abgewinkelten Platine angeordnet sind. Die abgewinkelten Platinen mit den zugehörigen Radarsensoren können beispielsweise an Ecken des Kraftfahrzeugs eingepasst werden.

Aus der DE 10 2007 039 834 A1 ist eine Radarsensorvorrichtung bekannt, die eine Mehrzahl integrierter Sensoreinrichtungen aufweist, welche auf einer Oberfläche eines Substrats angebracht sind. Die integrierten Sensoreinrichtungen sind derart gestaltet, dass sie über eine jeweilige Antenneneinrichtung Radarsignale in einer jeweiligen von der Oberfläche weg gerichteten Signalrichtung abstrahlen und/oder aus der jeweiligen Signalrichtung empfangen können.

Aus der DE 101 09 343 A1 ist eine Antennenanordnung mit Antennenelementen bekannt, die auf einem Antennenträger angeordnet sind. Zwischen den Antennenelementen und dem Antennenträger ist eine Auslenkeinheit angeordnet, die dazu ausgebildet ist, die einzelnen Antennenelemente unterschiedlich stark auszulenken.

Aus dem Artikel "Smart antennas using electro-active polymers for deformable parasitic elements" von A. Mahanfar et al., erschienen in Elektronics Letters, Band 44, Nr. 19, 11. September 2008, Seiten 1113 bis 1114, ist ein Aktuator zur Antennenpositionseinstellung bekannt. Dort wird ein leitendes Substrat durch Anlegen einer Spannung verformt, so dass die Antennenposition eingestellt werden kann.

Ferner ist in "A MEMS Non-Planar Constant Beamwidth Ultrasonic Sensor Microarray" in "North-East workshop on circuits and systems", 2006 IEEE, 01. Juni 2006, Seiten 273 bis 276, ein mikroelektromechanisches System beschrieben, das eine bessere Abdeckung eines Erfassungssystems, beispielsweise für Ultraschallerfassungssysteme von Kraftfahrzeugen, ermöglicht. Somit kann die Anzahl von benötigten Sensoren reduziert und die Abdeckung der Erfassungseinrichtung verbessert werden.

Daneben ist aus dem Dokument US 7 038 620 B1 eine Antennenanordnung bekannt, die eine definierte Krümmung bzw. Verzerrung aufweist, wodurch diese teilweise überlappende Einzelstrahlen aus oberen und unteren Regionen der Anordnung abstrahlt.

DE 10 2013 100 554 A1 zeigt daneben eine Radarvorrichtung mit wenigstens zwei Leiterplatten, wobei die Radarvorrichtung eine Schaltung aufweist, die dazu ausgebildet ist, Radarsignale zu erzeugen und zu senden sowie diese zu empfangen und aufzubereiten. Hierbei hat jede der Leiterplatten wenigstens eine ebene Fläche, deren Normalvektor zu den Normalvektoren der ebenen Flächen der übrigen Leiterplatten in eine unterschiedliche Richtung zeigt.

Der Erfindung liegt die Aufgabe zugrunde, eine verbesserte Radarsensoranordnung anzugeben, bei der die Anzahl der für ein Kraftfahrzeug benötigten Radarsensoren verringert werden kann.

Zur Lösung dieser Aufgabe ist bei einer Radarsensoranordnung der eingangs genannten Art erfindungsgemäß vorgesehen, dass das Substrat mittels eines Aktuators verformbar ist und die Radarsensoranordnung eine Steuerungseinrichtung aufweist oder damit verbindbar oder verbunden ist, die dazu ausgebildet ist, durch eine Ansteuerung des Aktuators, das Substrat zu verformen, wobei der Aktuator als Elektromotor ausgebildet ist.

Die erfindungsgemäße Radarsensoranordnung zeichnet sich somit dadurch aus, dass mindestens zwei Antennenmodule auf einem gemeinsamen Substrat, beispielsweise einer Platine oder Leiterplatte angeordnet sind. Das Substrat ist hierbei elastisch oder plastisch verformbar. Durch diese elastische oder plastische Verformbarkeit kann zwischen den beiden Antennenmodulen durch Biegen der Platine oder Leiterplatte ein Winkel eingestellt werden. Dieser wird durch die Verformung des Substrats erzeugt, indem das Substrat durch die elastische oder plastische Verformung abgewinkelt wird und die Antennenmodule dadurch in einem Winkel zueinander positioniert werden.

Dadurch ergibt sich der Vorteil, dass im Vergleich zu zwei Antennenmodulen, die auf einem gemeinsamen nicht abgewinkelten Substrat unter einem Winkel von 0° angeordnet sind, ein höherer Abdeckungsbereich, also eine höhere Radarabdeckung erzielt werden kann. Dies ergibt sich dadurch, dass durch die Abwinkelung die Bereiche der Radarabdeckung der einzelnen Antennenmodule weniger stark überlappen. Der Winkel des Substrats kann dabei so gewählt werden, dass die Bereiche der Radarabdeckung der einzelnen Antennenmodule einander gerade nicht überlappen, wodurch sich die Radarabdeckung der gesamten Radarsensoranordnung verbessert.

Das Substrat der erfindungsgemäßen Radarsensoranordnung weist ferner wenigstens eine Schaltungskomponente auf, die mit jedem der auf dem Substrat angeordneten Antennenmodule verbindbar oder verbunden ist, wobei die Schaltungskomponente in einem Chip oder Modul integriert ist. Dadurch kann der Chip und die Antenne in einem gemeinsamen Modul bzw. Package realisiert werden. Ferner kann auf dem Substrat auch ein digitaler Signalverarbeitungsprozessor (DSP-Prozessor) vorgesehen sein, der ebenfalls in das Modul bzw. Package integriert sein kann. Eine ähnliche Integration ist für Steuerungsfunktionen möglich.

Zweckmäßigerweise weist die Radarsensoranordnung ein Gehäuse auf, in dem das Substrat und die Antennenmodule aufgenommen sind. Dieses Gehäuse weist vorzugsweise einen elastisch oder plastisch verformbaren, insbesondere biegsamen Abschnitt auf. Dadurch wird die plastische oder elastische Verformbarkeit des Substrates gewährleistet. Bevorzugt kann der verformbare Abschnitt als verformbares Mittelteil des Gehäuses ausgebildet sein, da auf diese Weise eine symmetrische Anordnung der beiden Antennenmodule möglich ist, die bei einer symmetrischen Verformung des Substrates mit ihren Radarabdeckungen einen gleichförmigen Bereich der Radarabdeckung der Radarsensoranordnung bilden.

Erfindungsgemäß ist das Substrat mittels eines als Elektromotor ausgebildeten Aktuatorsverformbar. Dies bietet die Möglichkeit, das Substrat abhängig von der Applikation und Umfeldsituation zu verformen. Demnach kann die Radarabdeckung, die durch die beiden Antennenmodule realisiert wird, an die jeweilige Applikation angepasst werden. Somit wird beispielsweise durch eine Vergrößerung des Winkels um den das Substrat abgewinkelt wird, eine höhere Radarabdeckung und/oder eine Ausrichtung der Radarabdeckungen der einzelnen Antennenmodule in eine gewünschte Richtung erreicht. Ebenso ist es möglich, durch eine Verringerung des Winkels, unter Inkaufnahme eines Überlappungsbereichs, auch Objekte, die sehr nahe vor den Antennenmodulen positioniert sind, zu erfassen.

Unter dem "eingestellten" Winkel wird derjenige Winkel verstanden, den die Kanten des Substrats, die parallel zu der Achse verlaufen, um die das Substrat verformt wird, mit dieser einschließen. Der ingestellte Winkel kann sowohl ein spitzer Winkel (< 90°) als auch ein stumpfer Winkel (> 90°) sein. Durch eine Verformung bzw. Abwinklung des Substrats durch den Aktuator werden demnach die Abdeckungsbereiche der einzelnen Antennenmodule gegeneinander geschwenkt und bewegt.

Die erfindungsgemäße Radarsensoranordnung weist eine Steuerungseinrichtung auf oder ist damit verbunden, die dazu ausgebildet ist, durch eine Ansteuerung des Aktuators das Substrat zu verformen. Der Steuerungseinrichtung können dazu Daten eines Assistenzsystems des Kraftfahrzeugs zugeführt werden, die anwendungsabhängig eine Ansteuerung der Antennenmodule bzw. eine Form der Radarabdeckung vorgeben. Die Steuerungseinrichtung kann daraus Steuersignale erzeugen, die an den Aktuator gesendet werden. Dieser verstellt das Substrat entsprechend, wodurch der Winkel zwischen den Antennenmodulen eingestellt wird. Die gewünschte Radarabdeckung wird dadurch erreicht.

Bevorzugt weist die Verformung des Substrats einen Winkel aus einem Bereich von 100° - 160°, vorzugsweise 120° auf. Es handelt sich dabei um den stumpfen Winkel, also denjenigen Winkel, der auf der Seite des Substrats liegt, auf der die Antennenmodule angebracht sind.

Vorzugsweise ist die erfindungsgemäße Radarsensoranordnung zur Detektion von Objekten im Umfeld des Kraftfahrzeugs ausgebildet. Somit können mit der Radarsensoranordnung andere Verkehrsteilnehmer oder Objekte im Umfeld des Kraftfahrzeugs erfasst werden.

Die Radarsensoranordnung ist vorzugsweise derart ausgebildet, dass ein horizontaler Querschnitt der Radarabdeckung jedes Antennenmoduls, in dem dieses Radarsignale aussendet und/oder empfängt, im Wesentlichen die Form eines Dreiecks oder eines Kreissektors aufweist. Der horizontale Querschnitt in Form eines Kreissektors ist dabei derart ausgebildet, dass der Mittelpunkt des Kreisbogens mit dem Antennenmodul zusammenfällt. Die seitlichen Grenzen der Radarabdeckung des jeweiligen Antennenmoduls werden dabei von den Radien des Kreissektors begrenzt und der Kreisbogen des Kreissektors beschreibt die Grenze der Radarabdeckung des Antennenmoduls senkrecht zum Substrat. Im Falle eines Dreiecks als horizontaler Querschnitt der Radarabdeckung des Antennenmoduls liegt eine Spitze des Dreiecks im Antennenmodul selbst, wobei die derjenigen Ecke gegenüberliegende Seite parallel zu dem Antennenmodul bzw. zu dem Abschnitt des Substrats verläuft, auf dem das Antennenmodul angeordnet ist. Die anderen beiden Ecken des Dreiecks sind dabei bevorzugt symmetrisch in Bezug auf die erste Ecke positioniert.

Eine Weiterbildung der erfindungsgemäßen Radarsensoranordnung besteht darin, dass die Steuerungseinrichtung dazu ausgebildet ist, Radarsignale mittels digitalem Beamforming, vorzugsweise durch Algorithmen zur Signalverarbeitung, auszuwerten. Unter dem Begriff des digitalen Beamformings (DBF) wird eine Empfängerarchitektur verstanden, bei der entweder an jedem Antennenelement oder an kleinen Antennengruppen je ein individueller Empfänger geschaltet ist. Die Umsetzung in ein digitales Signal geschieht für jedes Antennenmodul individuell. Ferner kann ein spezieller Prozessor vorgesehen sein, in dem die Summenbildung der jeweiligen Signale erfolgt. Somit ist das Eigenrauschen und die Signalverzerrung der einzelnen Empfänger in der Summe dekorreliert. Es ist dadurch möglich für jede Empfangszeit mehrere unabhängige Hauptkeulen, die in verschiedene Richtungen zeigen können, zu realisieren. Dadurch ergeben sich Vorteile im Hinblick auf verbesserte Empfängerdynamik, schnelle Empfangsdiagrammänderungen, schnellere und bessere Steuerung von Signalamplituden und Phasenlagen.

Die Erfindung betrifft ferner ein Kraftfahrzeug mit wenigstens zwei paarweise angeordneten erfindungsgemäßen Radarsensoranordnungen, die an den vorderen und/oder hinteren Ecken des Kraftfahrzeugs angeordnet sind.

Mittels der erfindungsgemäßen Radarsensoranordnung ist es demnach möglich, eine 360°-Abdeckung rund um das Kraftfahrzeug zu erreichen, indem jeweils zwei paarweise angeordnete Radarsensoranordnungen im Bereich der vorderen und der hinteren Ecken des Kraftfahrzeugs angeordnet sind. Im Gegensatz zum Stand der Technik, in dem planare Substrate verwendet werden, wobei sich somit zwangsläufig ein Überlappungsbereich der Radarabdeckungen der einzelnen Antennenmodule einstellt, genügen für eine 360°-Abdeckung vier erfindungsgemäße Radarsensoranordnungen anstelle von acht Radarsensoranordnungen, die für eine 360°-Abdeckung mit einem herkömmlichen System erforderlich wären.

Die Erfindung wird nachfolgend anhand von Ausführungsbeispielen unter Bezugnahme auf die Zeichnungen erläutert. Die Figuren sind schematische Darstellungen und zeigen:
- Fig. 1: eine Frontansicht einer erfindungsgemäßen Radarsensoranordnung;
- Fig. 2: eine Draufsicht auf die erfindungsgemäße Radarsensoranordnung von Fig. 1;
- Fig. 3: eine Draufsicht der erfindungsgemäßen Radarsensoranordnung von Fig. 1 in einem abgewinkelten Zustand;
- Fig. 4: eine Draufsicht auf ein erfindungsgemäßes Kraftfahrzeug mit vier erfindungsgemäßen Radarsensoranordnungen;
- Fig. 5: das erfindungsgemäße Kraftfahrzeug von Fig. 4, in einem abgewinkelten Zustand der vier Radarsensoranordnungen;
- Fig. 6: einen Ausschnitt der Front eines erfindungsgemäßen Kraftfahrzeugs mit einer Radarsensoranordnung; und
- Fig. 7: den Ausschnitt des erfindungsgemäßen Kraftfahrzeugs von Fig. 6, wobei sich die Radarsensoranordnung in einem abgewinkelten Zustand befindet.

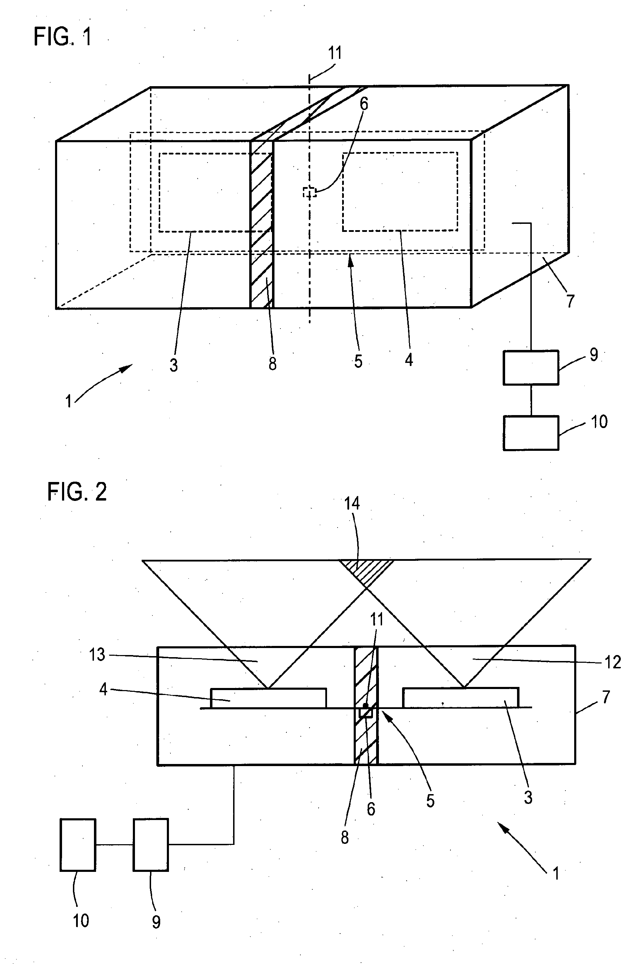

Fig. 1 zeigt eine Radarsensoranordnung 1 für ein Kraftfahrzeug, umfassend zwei Antennenmodule 3 und 4 mit jeweils einer nicht näher dargestellten Sendeeinheit zum Aussenden von Radarsignalen und einer Empfangseinheit zum Empfangen von Radarsignalen. Die Antennenmodule 3 und 4 sind auf einem gemeinsamen Substrat 5 angeordnet. Das Substrat 5 ist elastisch verformbar und weist nicht näher dargestellte Schaltungskomponenten auf, die beiden Antennenmodulen 3 und 4 zur Verfügung stehen und mit denen diese über Leitungen verbunden sind. Die Schaltungskomponenten sind in einem Modul 6 integriert.

Das Substrat 5 mit den Antennenmodulen 3 und 4 und dem Modul 6 ist in einem Gehäuse 7 angeordnet, das ebenfalls elastisch verformbar ist. Die elastische Verformbarkeit des Gehäuses 7 wird durch einen elastischen Abschnitt 8 erreicht. Dieser ist in diesem Ausführungsbeispiel symmetrisch in der Mitte des Gehäuses 7 angeordnet. Fig. 1 zeigt ferner schematisch einen Aktuator 9, der mit einer Steuerungseinrichtung 10 verbunden ist. Der Aktuator 9 ist dazu ausgebildet, das Substrat 5 und das Gehäuse 7 durch die Steuerungseinrichtung 10 um eine Achse 11 elastisch zu verformen.

Fig. 2 zeigt die Radarsensoranordnung 1 von Fig. 1 in einer Draufsicht. Das Substrat 5 befindet sich in einer Ausgangsstellung. In dieser Ausgangsstellung ist das Substrat nicht verformt und weist somit keinen Winkel zwischen den Antennenmodulen 3 und 4 auf. Ferner sind in Fig. 2 die Radarabdeckungen 12 und 13 der Antennenmodule 3 und 4 dargestellt. Aufgrund der parallelen Ausrichtung der Radarmodule 3 und 4 sowie des unverformten Substrats 5 stellt sich ein Überlappungsbereich 14 der Radarabdeckungen 12 und 13 ein.

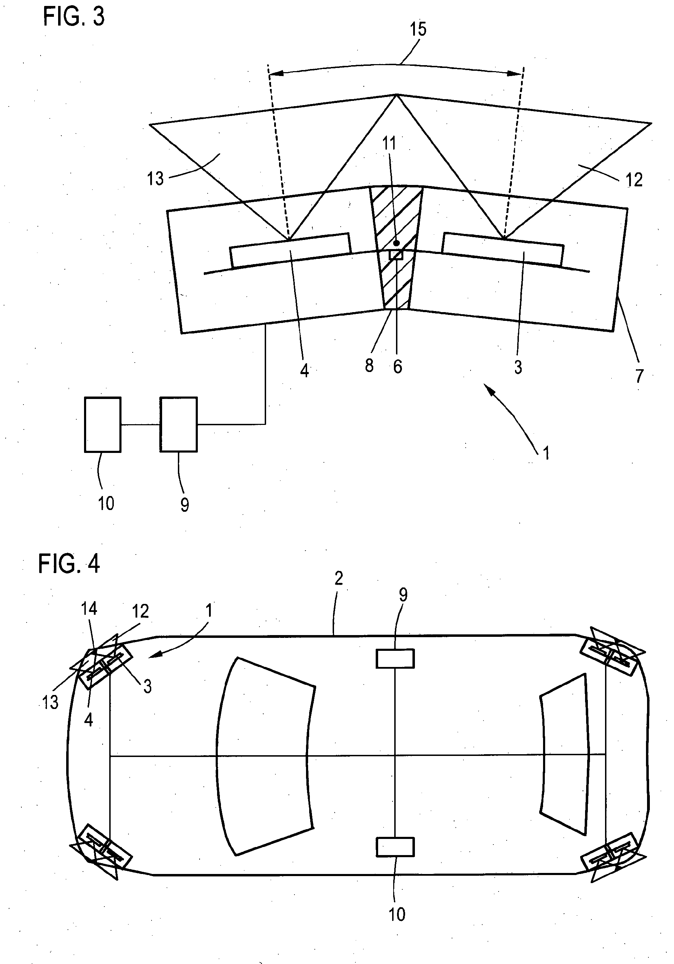

Fig. 3 zeigt die Radarsensoranordnung von Fig. 1 in einer Draufsicht, nachdem die Steuerungseinrichtung 10 den Aktuator 9 so angesteuert hat, dass das Substrat 5 und das damit verbundene Gehäuse 7 um die Achse 11 derart verstellt worden sind, dass sich der Winkel 15 zwischen den Antennenmodulen 3 und 4 ergibt. Das Gehäuse 7 wird aufgrund seines biegbaren Abschnitts 8, der als Mittelteil des Gehäuses 7 ausgebildet ist, entsprechend verformt und bewegt.

Aufgrund dieser Verformung verschwindet der Überlappungsbereich 14. Die Radarabdeckungen 12 und 13 der Radarmodule 3 und 4 grenzen somit an einer Ecke aneinander. Der Winkel 15 kann hierbei je nach Anwendung durch eine Ansteuerung des Aktuators 9 durch die Steuerungseinrichtung 10 angepasst werden, um so die gesamte Radarabdeckung der Radarsensoranordnung 1 zu formen.

Fig. 4 zeigt ein Kraftfahrzeug 2 mit vier Radarsensoranordnungen 1. Die Radarsensoranordnungen 1 sind an jeder der vier Ecken des Kraftfahrzeugs 2 angeordnet. Die Radarsensoranordnungen 1 befinden sich in Fig. 4 in der Ausgangsstellung, die ebenfalls in Fig. 2 gezeigt ist. Die Radarsensoranordnungen weisen Überlappungsbereiche 14 auf, die einer Überdeckung der Radarabdeckungen 12, 13 der jeweiligen Antennenmodule 3 und 4 entsprechen.

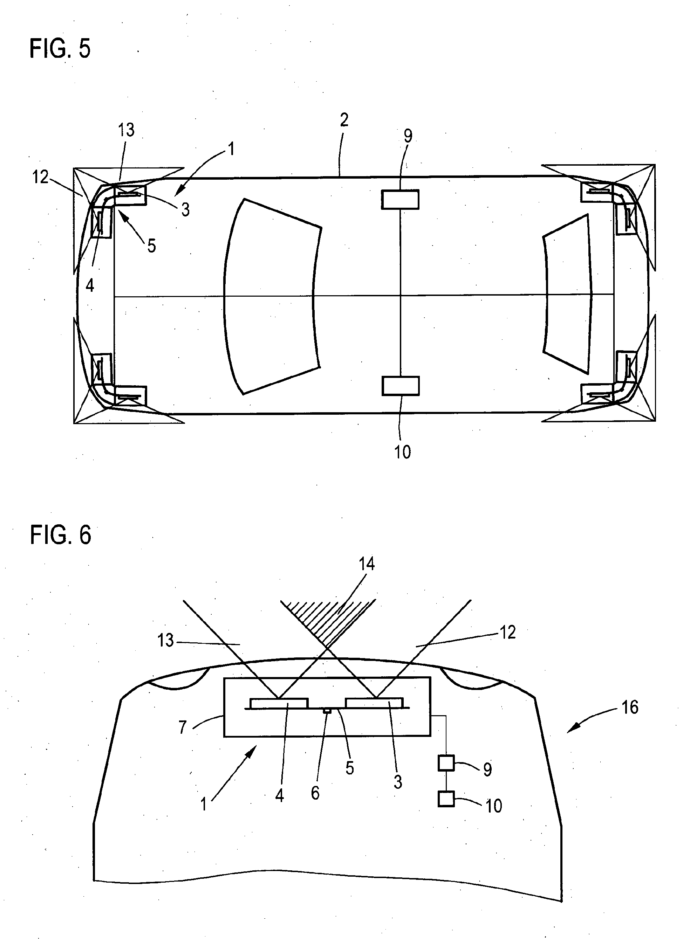

Nach einer Ansteuerung des Aktuators 9 durch die Steuerungseinrichtung 10 liegt der in Fig. 5 gezeigte Zustand vor. Der Aktuator 9 hat das Substrat 5 derart verformt, dass die Radarsensoranordnungen 1 in die Ecken des Kraftfahrzeugs 2 eingepasst werden können. Hierdurch wird eine 360° Abdeckung des Umfelds des Kraftfahrzeugs 2 erreicht.

Fig. 6 zeigt einen Ausschnitt eines Kraftfahrzeugs 16, bei dem eine Radarsensoranordnung 1 mittig in der Front angeordnet ist. Gemäß diesem Ausführungsbeispiel ist die Radarsensoranordnung 1 derart eingestellt, dass die Antennenmodule 3 und 4 parallel zueinander, also ohne Ausbildung eines Winkels ausgerichtet sind. Diese Einstellung ist günstig für ein ACC-System, da die Radarabdeckungen 12 und 13 der Antennenmodule 3 und 4 nach vorne gerichtet sind, um so einen vorausgehenden Verkehrsteilnehmer effektiv erfassen zu können. Die Randbereiche in den Ecken des Kraftfahrzeugs 16 werden hingegen nicht erfasst.

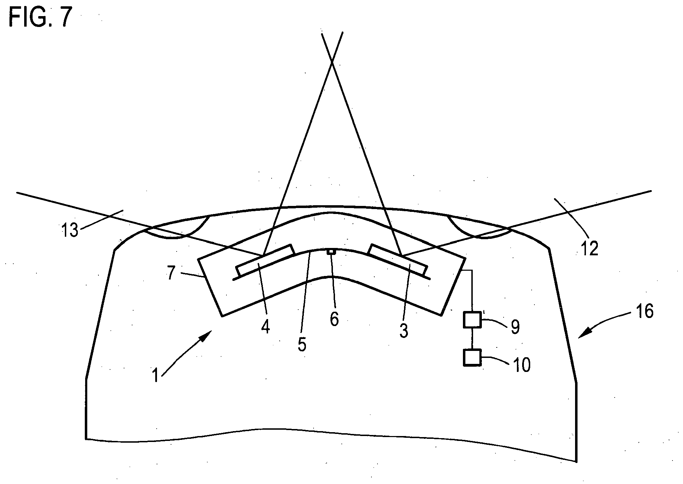

Fig. 7 zeigt das Kraftfahrzeug 16 von Fig. 6 in einem Zustand, nachdem die Radarsensoranordnung 1 durch den Aktor 9 verstellt wurde. Hierdurch wird die komplette Frontpartie des Kraftfahrzeugs 16 durch die Radarabdeckungen 12 und 13 der Antennenmodule 3 und 4 abgedeckt. Diese Ausrichtung kann bei einem Einparkvorgang eingesetzt werden, um Objekte, die sich dem Kraftfahrzeug 16 beim Einparken nähern, zu erfassen. Ebenso ist es möglich die Platine 5 durch den Aktor 9 derart zu verformen, dass die Antennenmodule 3, 4 derart ausgerichtet werden, dass die Radarabdeckungen 12 und 13 in Fahrtrichtung ausgerichtet werden. Die Steuerungseinrichtung 10 sendet dazu die nötigen Steuerungsdaten an den Aktuator 9. Somit wird gewährleistet, dass eine verbesserte, der Fahrsituation und/oder der Umfeldsituation angepasste Radarabdeckung in Fahrtrichtung des Kraftfahrzeugs 16 vorliegt.

Es ist selbstverständlich ebenso möglich, die Radarsensoranordnungen 1 ohne den Aktuator 9 zu verwenden, indem diese voreingestellt auf einen bestimmten Winkel 15 im Kraftfahrzeug 2 montiert sind. Dafür bietet sich derjenige Winkel 15 an, bei dem ein Überlappungsbereich 14 der Radarabdeckungen 12, 13 der einzelnen Antennenmodule 3 und 4 gerade verschwindet. Ferner ist es ebenso möglich, für jede Radarsensoranordnung 1 eine separate Steuerungseinrichtung 10 und/oder einen separaten Aktuator 9 vorzusehen, der jede der Radarsensoranordnungen 1 separat stufenlos oder in festgelegten Stufen verformt.

## Patentansprüche

1. Radarsensoranordnung (1) für ein Kraftfahrzeug (2, 16), umfassend wenigstens zwei Antennenmodule (3, 4) mit jeweils einer Sendeeinheit zum Aussenden von Radarsignalen und einer Empfangseinheit zum Empfangen von Radarsignalen, wobei die Antennenmodule (3, 4) auf einem gemeinsamen Substrat (5) angeordnet sind, das elastisch oder plastisch verformbar ist und wenigstens eine Schaltungskomponente aufweist, die mit jedem der auf dem Substrat (5) angeordneten Antennenmodule (3, 4) verbindbar oder verbunden ist, wobei die wenigstens eine Schaltungskomponente in einem Chip oder Modul integriert ist,
**dadurch gekennzeichnet,**
**dass** das Substrat (5) mittels eines Aktuators (9) verformbar ist und die Radarsensoranordnung (1) eine Steuerungseinrichtung (10) aufweist oder damit verbindbar oder verbunden ist, die dazu ausgebildet ist, durch eine Ansteuerung des Aktuators (9), das Substrat (5) zu verformen, wobei der Aktuator (9) als Elektromotor ausgebildet ist.

2. Radarsensoranordnung nach Anspruch 1,
**dadurch gekennzeichnet,**
**dass** das Substrat (5) und die Antennenmodule (3, 4) in einem Gehäuse (7) aufgenommen sind, das einen elastisch oder plastisch verformbaren, insbesondere biegsamen, Abschnitt (8) aufweist.

3. Radarsensoranordnung nach Anspruch 1 oder 2,
**dadurch gekennzeichnet,**
**dass** eine Verformung des Substrats (5) einen Winkel (15) aus einem Bereich von 100° bis 160°, vorzugsweise 120°, aufweist.

4. Radarsensoranordnung nach einem der vorangehenden Ansprüche,
**dadurch gekennzeichnet,**
**dass** sie zur Detektion von Objekten im Umfeld des Kraftfahrzeugs (2, 16) ausgebildet ist.

5. Radarsensoranordnung nach einem der vorangehenden Ansprüche,
**dadurch gekennzeichnet,**
**dass** ein horizontaler Querschnitt der Radarabdeckung (12, 13) jedes Antennenmoduls (3, 4), in dem dieses Radarsignale aussendet und empfängt, im Wesentlichen die Form eines Dreiecks oder eines Kreissektors aufweist.

6. Radarsensoranordnung nach einem der vorangehenden Ansprüche,
**dadurch gekennzeichnet,**
**dass** die Steuerungseinrichtung (10) dazu ausgebildet ist, Radarsignale mittels digitalem Beamforming, vorzugsweise durch Algorithmen zur Signalverarbeitung, auszuwerten.

7. Kraftfahrzeug (2, 16) mit wenigstens zwei paarweise angeordneten Radarsensoranordnungen (1) nach einem der vorangehenden Ansprüche, die an den vorderen und/oder hinteren Ecken des Kraftfahrzeugs (2, 16) angeordnet sind.

## Claims

1. Radar sensor arrangement (1) for a motor vehicle (2, 16), comprising at least two antenna modules (3, 4) each having a transmitting unit for transmitting radar signals and a receiving unit for receiving radar signals, wherein the antenna modules (3, 4) are arranged on a common substrate (5), which is elastically or plastically deformable and comprises at least one circuit component which is connectable or connected to each of the antenna modules (3, 4) arranged on the substrate (5), wherein the at least one circuit component is integrated in a chip or module,
**characterised in that**
the substrate (5) is deformable by means of an actuator (9) and the radar sensor arrangement (1) comprises or is connectable or connected to a control device (10) adapted to deform the substrate (5) by actuating the actuator (9), wherein the actuator (9) is in the form of an electric motor.

2. Radar sensor arrangement according to claim 1,
**characterised in that**
the substrate (5) and the antenna modules (3, 4) are accommodated in a housing (7) which has an elastically or plastically deformable, in particular flexible, section (8).

3. Radar sensor arrangement according to claim 1 or 2,
**characterised in that**
a deformation of the substrate (5) has an angle (15) from a range of 100° to 160°, preferably 120°.

4. Radar sensor arrangement according to any one of the preceding claims,
**characterised in that**
it is designed for detecting objects in the surroundings of the motor vehicle (2, 16).

5. Radar sensor arrangement according to any one of the preceding claims,
**characterised in that**
a horizontal cross-section of the radar cover (12, 13) of each antenna module (3, 4), in which it transmits and receives radar signals, has substantially the shape of a triangle or a circle sector.

6. Radar sensor arrangement according to any one of the preceding claims,
**characterised in that**
the control device (10) is designed to evaluate radar signals by means of digital beamforming, preferably by algorithms for signal processing.

7. Motor vehicle (2, 16) with at least two radar sensor arrangements (1) arranged in pairs according to any one of the preceding claims which are arranged at the front and/or rear corners of the motor vehicle (2, 16).

## Revendications

1. Dispositif de capteur radar (1) pour un véhicule automobile (2, 16), comprenant au moins deux modules d'antennes (3, 4) avec chacun une unité émettrice destinée à l'émission de signaux radars et une unité réceptrice destinée à la réception de signaux radars, dans lequel les modules d'antennes (3, 4) sont agencés sur un substrat (5) commun qui est déformable élastiquement ou plastiquement et qui présente au moins un composant de circuit qui est ou peut être relié à chacun des modules d'antennes (3, 4) agencés sur le substrat (5), dans lequel l'au moins un composant de circuit est intégré dans une puce ou un module,
**caractérisé en ce**
**que** le substrat (5) est déformable au moyen d'un actionneur (9) et le dispositif de capteur radar (1) présente un dispositif de commande (10) ou est ou peut être relié à celui-ci, lequel dispositif de commande est réalisé afin de déformer le substrat (5) via une commande de l'actionneur (9), lequel actionneur (9) est réalisé comme un moteur électrique.

2. Dispositif de capteur radar selon la revendication 1,
**caractérisé en ce**
**que** le substrat (5) et les modules d'antennes (3, 4) sont logés dans un boîtier (7) qui présente une partie (8) déformable élastiquement ou plastiquement, en particulier flexible.

3. Dispositif de capteur radar selon la revendication 1 ou 2,
**caractérisé en ce**
**qu'**une déformation du substrat (5) présente un angle (15) compris entre 100° et 160°, de préférence de 120°.

4. Dispositif de capteur radar selon l'une quelconque des revendications précédentes,
**caractérisé en ce**
**qu'**il est réalisé en vue de la détection d'objets dans l'environnement du véhicule automobile (2, 16).

5. Dispositif de capteur radar selon l'une quelconque des revendications précédentes,
**caractérisé en ce**
**qu'**une section transversale horizontale de la couverture radar (12, 13) de chaque module d'antenne (3, 4) dans laquelle celui-ci émet et reçoit des signaux radars présente globalement la forme d'un triangle ou d'un secteur de cercle.

6. Dispositif de capteur radar selon l'une quelconque des revendications précédentes,
**caractérisé en ce**
**que** le dispositif de commande (10) est réalisé pour évaluer des signaux radars au moyen d'une mise en forme de faisceaux numérique, de préférence par des algorithmes destinés au traitement du signal.

7. Véhicule automobile (2, 16) avec au moins deux dispositifs de capteur radar (1), agencés par paire, selon l'une quelconque des revendications précédentes, qui sont agencés au niveau des angles avant et/ou arrière du véhicule automobile (2, 16).
